# EUROPÄISCHE PATENTSCHRIFT

(11) **EP 0 696 020 B1**
(45) Veröffentlichungstag und Bekanntmachung des Hinweises auf die Patenterteilung: **23.09.1998**
(21) Anmeldenummer: 95111288.7
(22) Anmeldetag: 19.07.1995
(51) Int. Cl.: G07F 7/00

(54) **Münzprüfer mit Kartenleser und Verfahren zum lesen einer Karte**
Coin tester with card reader and method of reading a card
Vérificateur de pièces de monnaie avec lecteur de cartes et procédé de lecture d'une carte

(30) Priorität: 03.08.1994 CH 2430/94
(43) Veröffentlichungstag der Anmeldung: 07.02.1996
(73) Patentinhaber: JOURNOMAT AG, 6340 Baar (CH)
(72) Erfinder: Menoud, Edouard, CH-1228 Plan-les-Ouates (CH)
(74) Vertreter: Blöchle, Hans

(56) Entgegenhaltungen:
- WO-A-89/02140
- DE-A- 3 533 740
- DE-A- 4 318 217
- FR-A- 2 644 268
- GB-A- 2 177 835
- US-A- 5 147 021

## Beschreibung

Die Erfindung betrifft einen Münzprüfer mit Kartenleser zur Prüfung und Auswertung von Zahlungsmitteln für Produkte, wobei der Münzprüfer einen Schacht für als Zahlungsmittel vorgesehene Münzen und Karten aufweist, der in einen ersten Münzkanal und in einen Kartenschacht mündet, wobei die Münzen im ersten Münzkanal mittels Sensoren geprüft und ausgewertet werden und die Karte mittels Kontaktflächen mit Kontaktzungen einer dem Kartenleser zugehörigen gedruckten Schaltung zum Datenaustausch mit einem Rechner in Verbindung steht.

Aus der Patentschrift US 4 880 097 ist ein elektronisches Parkingmeter bekannt geworden, bei dem die Parkgebühren mittels Münzen oder Parkkarten zahlbar sind. Münzen und Parkkarten werden in denselben Schlitz gesteckt, der in einen für Münzen und Parkkarten gemeinsamen Schacht mündet, in dem zwei Endschalter angeordnet sind. Ein erster Endschalter wird mittels der Münzen betätigt, ein zweiter Endschalter wird mittels der Parkkarten betätigt. Sobald der erste Endschalter von einer Münze betätigt wird, geht der Mikroprozessor vom Wartezustand in den Betriebszustand über und schaltet dabei unverzüglich den Münzdiskriminator ein. Der Mikroprozessor des Parkingmeters veranlasst die Speisung der Parkkarte und tauscht mit dieser Daten aus, sobald der Mikroprozessor ein Signal des zweiten Endschalters erkennt.

Ein Nachteil der bekannten Einrichtung liegt darin, dass der Benutzer nicht sogleich erkennen kann, dass das Parkingmeter mit Münzen und Karten bestückt werden kann.

WO-A-8 902 140 offenbart ein Verfahren zum Lesen einer Karte mit einem Datenträger mittels eines Kartenlesers und zum Sichern der Daten beim Zurückziehen der Karte vom Kartenleser während eines Datentransfers zwischen dem Rechner und der Karte.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und einen Münzprüfer mit Kartenleser vorzuschlagen, bei dem ohne weiteres ersichtlich ist, dass Münzen und Karten als Zahlungsmittel akzeptiert werden, ohne dass dadurch der durch den gemeinsamen Schacht für Münzen und Karten bedingte einfache Aufbau des Gerätes beeinträchtigt wird und bei dem der Kunde seine Karte jederzeit zurückziehen kann, ohne dass dabei Daten verloren gehen.

Die durch die Erfindung erreichten Vorteile sind im wesentlichen darin zu sehen, dass falls ein Schlitz durch Gegenstände versperrt oder beschädigt ist, der Münzprüfer weiterhin funktionstüchtig bleibt, indem mindestens ein Zahlungsmittel im funktionstüchtigen Schlitz akzeptiert wird. Besonders vorteilhaft dabei ist, dass durch den Kartenschlitz eingeführte Münzen ebenfalls in den Münzkanal gelangen. Ein weiterer Vorteil besteht darin, dass eine irrtümlich eingesteckte Karte ohne Kaufzwang für ein Produkt zurückgezogen werden kann ohne dass der Kaufpreis dem Kunden belastet wird.

Im folgenden wird die Erfindung anhand von lediglich einen Ausführungsweg darstellenden Zeichnungen näher erläutert. Es zeigen:
- Fig. 1: eine Seitenansicht des erfindungsgemässen Münzprüfers,
- Fig. 2: eine schematische Darstellung des geöffneten Münzprüfers,
- Fig. 3: eine Draufsicht des Münzprüfers,
- Fig. 4: einen Schnitt entlang der Linie A-A gemäss Fig. 1,
- Fig. 5: eine schematische Darstellung einer Münzprüfersteuerung,
- Fig. 6a und 6b: ein Flussdiagramm eines ersten Algorithmus zur Steuerung des Datentransfers und
- Fig. 7a, 7b, 7c und 7d: ein Flussdiagramm eines zweiten Algorithmus zur Steuerung des Datentransfers.

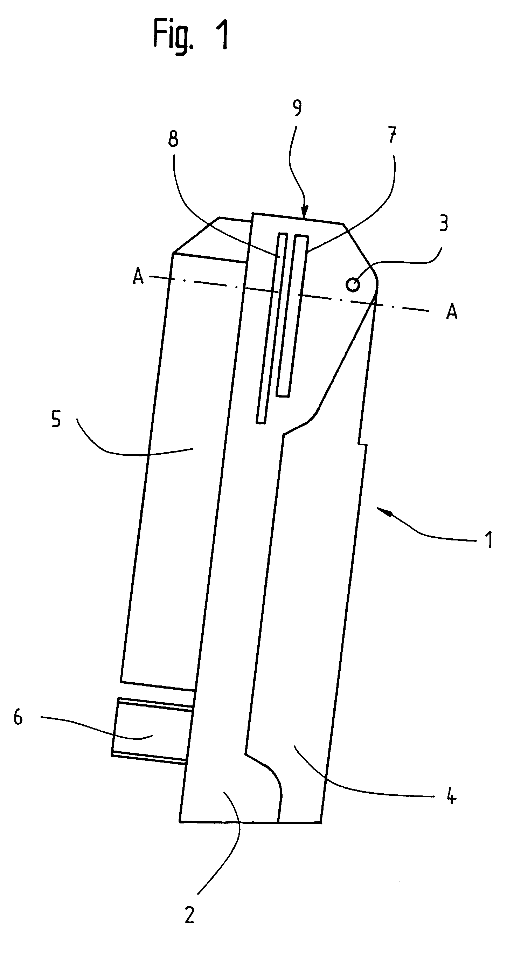

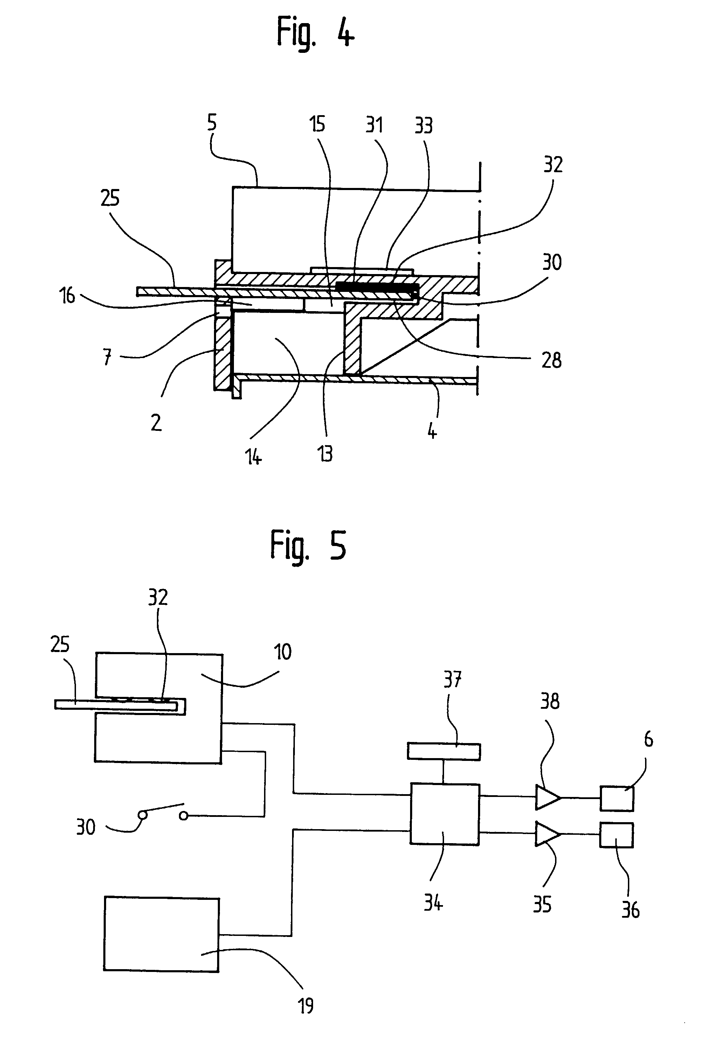

In den Fig. 1 bis 5 ist mit 1 ein Münzprüfer bezeichnet, der in Einbaulage dargestellt ist. Der Münzprüfer besteht aus einem Gehäuse 2, an dem an einer Achse 3 eine Klappe 4 schwenkbar angeordnet ist. Der Klappe 4 gegenüberliegend ist eine Abdeckung 5 und ein erster Elektromagnet 6 angeordnet. Stirnseitig weist das Gehäuse 2 einen ersten Münzschlitz 7 und einen Kartenschlitz 8 auf. Ein von oben zugänglicher zweiter Münzschlitz ist mit 9 bezeichnet.

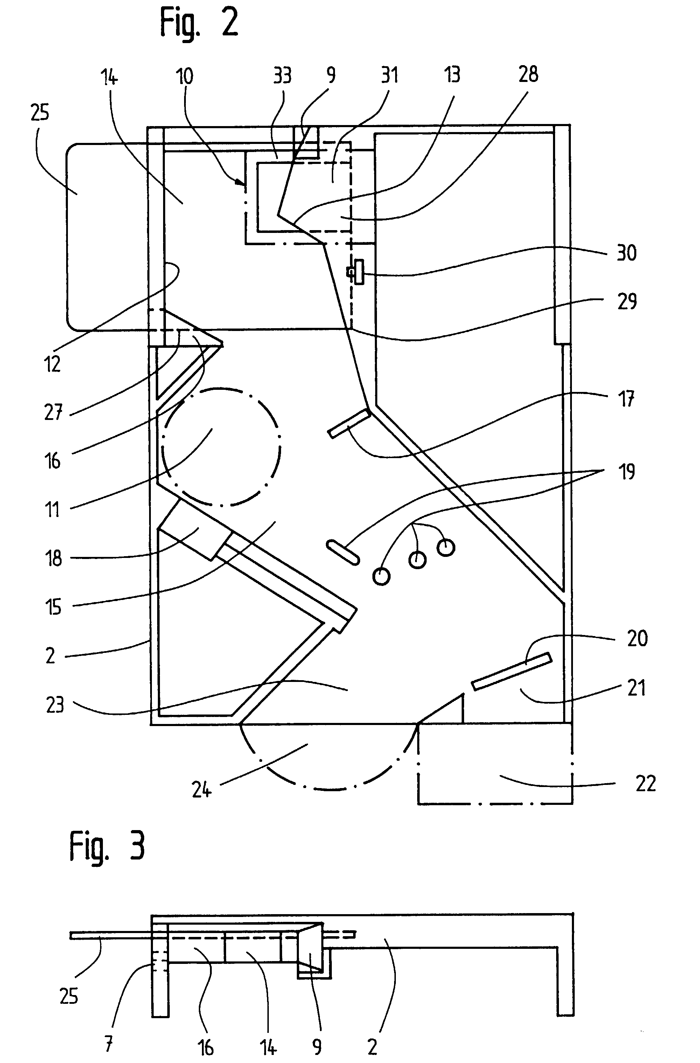

Fig. 2 zeigt den geöffneten Münzprüfer 1 mit einem Kartenleser 10. Eine durch den ersten Münzschlitz 7 oder zweiten Münzschlitz 9 eingeführte Münze 11 gelangt in einen durch eine erste Schachtwand 12 und eine zweite Schachtwand 13 begrenzten Schacht 14, der nach unten hin in einen ersten Münzkanal 15 mündet. Wegen der in Fig. 1 dargestellten Einbaulage des Münzprüfers 1 rollt die Münze entlang der Klappenwand von einem Träger 16 zu einer ersten Umlenkung 17 und von dieser weiter zu einer zweiten Umlenkung 18. Nach der zweiten Umlenkung 18 wird die Münze 11 in bekannter Weise von Sensoren 19 auf bestimmte Eigenschaften geprüft. Stimmen die geprüften Eigenschaften mit einem vorgegebenen Münzenstandard überein, so betätigt der erste Elektromagnet 6 eine Weiche 20. Die geprüfte Münze 11 fällt durch einen zweiten Münzkanal 21 in eine schematisch dargestellte Kasse 22. Bei ungültigen Münzen oder bei überfüllter Kasse 22 bleibt die Weiche 20 in der gezeigten Lage. Die Münze 11 fällt durch einen dritten Münzkanal 23 in eine schematisch dargestellte Münzschale 24 und kann dort vom Kunden entnommen werden.

Beim Einführen einer Karte 25 mit einem Datenträger in den Kartenschlitz 8 gleitet die Karte 25 in einer ersten Führung 26 und in einer im Träger 16 angeordneten zweiten Führung 27 durch den Schacht 14 in einen Kartenschacht 28. Die zweite Führung 27 endet als dritte Führung 29 in der zweiten Schachtwand 13. Mittels eines im Kartenschacht 28 angeordneten Endschalters 30 wird die Endlage der Karte 25 überprüft. In der Endlage stehen an einer Platte 31 angeordnete Kontaktzungen 32 in Verbindung mit Kontaktflächen der Karte 25. Die Platte 31 mit den Kontaktzungen 32 ist Bestandteil einer gedruckten Schaltung 33 des Kartenlesers 10.

Fig . 5 zeigt schematisch eine Steuerung des Münzprüfers 1 mit Kartenleser 10. Sobald der Endschalter 30 geschlossen ist, tauscht ein Rechner 34 Daten mit der Karte 25 aus. Bei gültigen Daten aktiviert der Rechner 34 mittels eines zweiten Verstärkers 35 einen zweiten Elektromagneten 36, der ein Produktefach öffnet. Werden Münzen als Zahlungsmittel verwendet, so vergleicht der Rechner 34 die Münzeigenschaften darstellenden Signale der Sensoren 19 mit dem in einem dem Rechner 34 zugeordneten Speicher 37 abgelegten Münzenstandard. Bei Übereinstimmung aktiviert der Rechner 34 einen ersten Verstärker 38, der den Elektromagneten 6 zur Betätigung der Weiche 20 steuert. Gleichzeitig wird das Produktefach mittels des zweiten Verstärkers 35 und mittels des zweiten Elektromagneten 36 geöffnet. Rechner 34, Speicher 37, Verstärker 35, 38 können Bestandteil des Münzprüfers oder eines Verkaufsautomaten sein. Nicht dargestellt sind die Betätigungselemente für die Klappe 4. Üblicherweise ist eine vom Kunden betätigbare Rückgabetaste vorgesehen, die einen Elektromagneten ansteuert, der die Klappe 4 schwenkt. Dieser Elektromagnet kann auch vom Rechner angesteuert werden. Steckengebliebene Münzen wie auch böswillig in den Schacht 14 eingeführte Gegenstände fallen beim Schwenken der Klappe 14 nach unten. Vorteilhafterweise werden Schacht 14, Kartenschacht 28 und Münzkanal 15 durch einmaliges Schwenken der Klappe 4 gleichzeitig gereinigt.

Die beispielsweise bei Telefonautomaten verwendeten Karten eignen sich lediglich für kleine Datenmengen. Solche Karten weisen nur einen EEPROM Speicher auf, bei dem je Bit eine Wertmarke zugeordnet wird. Eine Datensicherung während des Datentransfers ist nicht zwingend oder wird durch Festhalten der Karte während des Datentransfers gewährleistet. Bei umfangreichen Datenmengen ist eine Datensicherung für den Fall eines unterbrochenen Datentransfers unumgänglich.

Im Rechner 34 implementierte Algorithmen verhindern Datenverluste auf der Karte 25 selbst dann, wenn der Kunde seine Karte zurückzieht bevor der Datentransfer abgeschlossen und das Produkt ausgegeben ist.

Ein erster Algorithmus ALGO1 steuert den Datentransfer mit Karten mit Datenträger, beispielsweise Karten mit EEPROM Speicher. Ein solcher Speicher ist derart organisiert, dass die notwendigen Transferdaten wie beispielsweise verfügbarer Betrag, Ablaufdatum, Produkteart etc. von Kontrolldaten begleitet werden, die jederzeit die Überprüfung der Transferdaten erlauben. Transferdaten und Kontrolldaten werden im EEPROM Speicher zweifach abgelegt, nämlich in einem ersten Speicherbereich E1 und in einem zweiten Speicherbereich E2. Im vorliegenden Beispiel dient der erste Speicherbereich E1 als Endspeicher für die gesamte Informationsmenge einer Transaktion und der zweite Speicherbereich E2 als Transferspeicher. Jeder Speicherbereich E1, E2 kann als Transferspeicher oder als Endspeicher verwendet werden. Der Inhalt des ersten Speicherbereiches E1 ist normalerweise identisch mit dem Inhalt des zweiten Speicherbereiches E2. Vor einer Transaktion, beispielsweise beim Kauf einer Zeitschrift oder eines Getränkes und dem damit verbundenen Datentransfer wird der erste Speicherbereich E1 und anschliessend der zweite Speicherbereich E2 gelesen. Falls der Inhalt des einen Speicherbereiches inkohärent ist, wird der inkohärente Inhalt durch den kohärenten Inhalt des anderen Speicherinhaltes ersetzt. Der Datentransfer wird erst dann ausgelöst, wenn die Inhalte beider Speicherbereiche E1, E2 kohärent sind. In einem ersten Schritt wird beispielsweise der neue Saldo berechnet und anschliessend im zweiten Speicherbereich E2 gespeichert. In einem zweiten Schritt wird der Inhalt des zweiten Speicherbereiches E2 gelesen und auf Kohärenz überprüft. Bei einem positiven Prüfungsresultat wird das dem Datentransfer entsprechende Produkt freigegeben und anschliessend der Inhalt des zweiten Speicherbereiches E2 in den ersten Speicherbereich E1 kopiert. Ein vorzeitiges Zurückziehen der Karte 25 hat in jedem Fall einen inkohärenten Inhalt des einen oder anderen Speicherbereiches zur Folge, niemals aber inkohärente Inhalte beider Speicherbereiche. Die Rücksetzung des Inhaltes des einen oder anderen Speicherbereiches in den Zustand vor dem Zurückziehen der Karte 25 ist jederzeit gewährleistet.

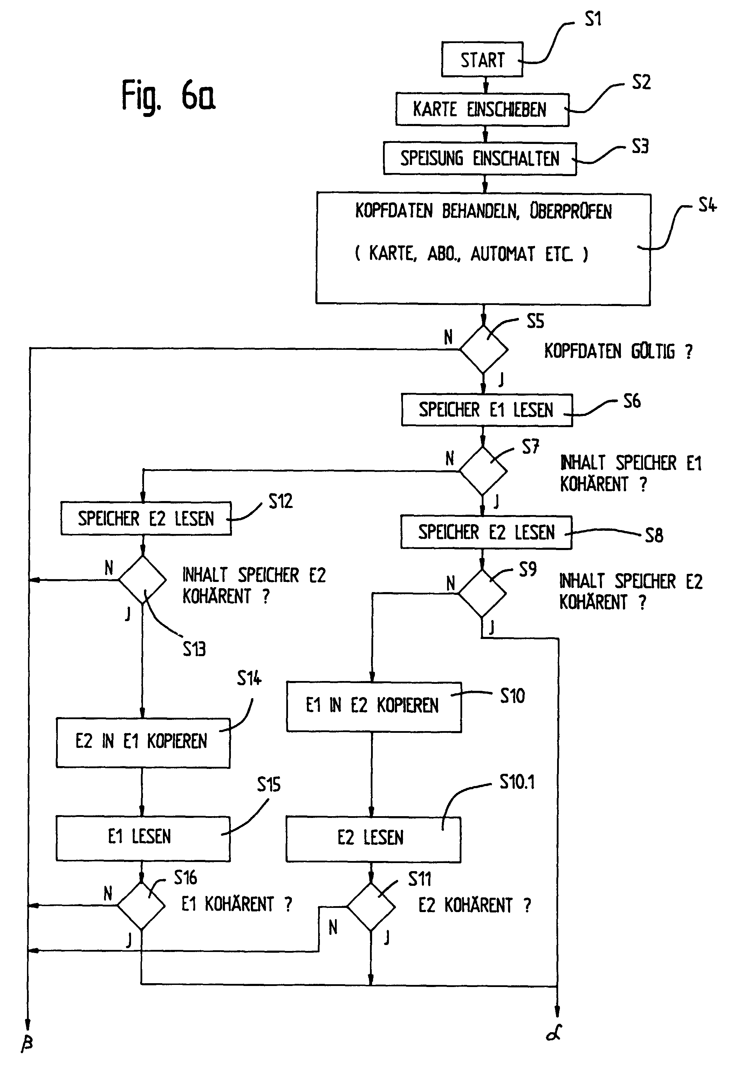

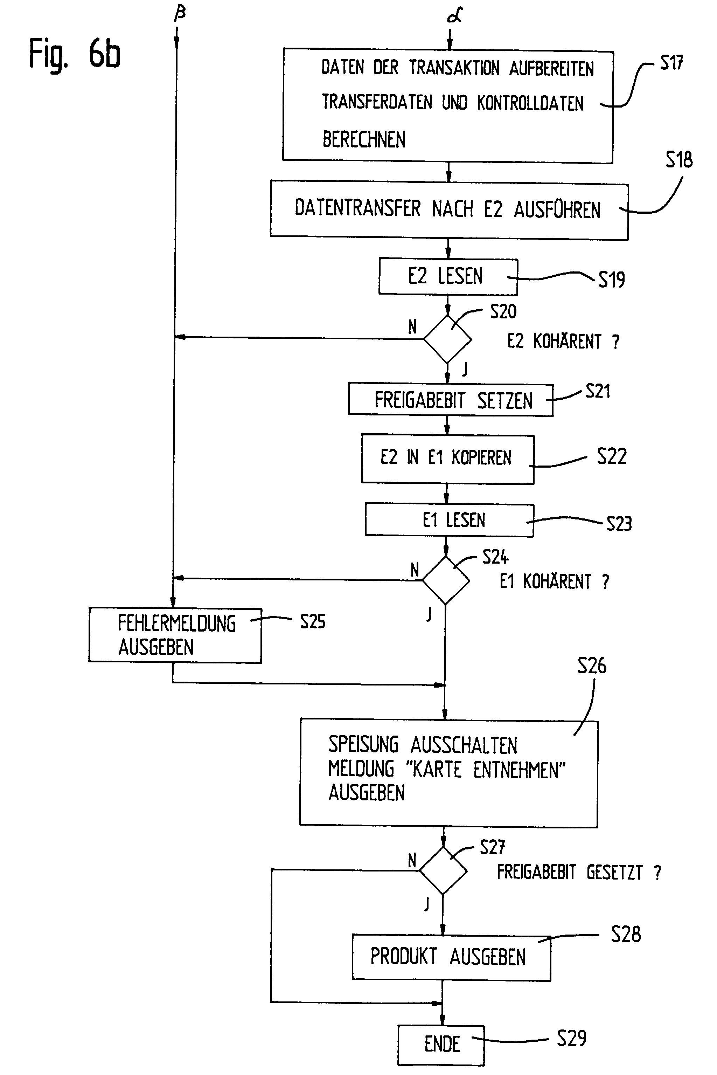

Fig. 6a und 6b zeigen den ersten Algorithmus ALGO1 in bekannter Darstellungsform eines Flussdiagrammes. Die Schritte S1 ... S4 dienen der Initialisierung, der Prüfung und der Identifikation der auf der Karte 25 gespeicherten Kopfdaten wie beispielsweise Hersteller der Karte Automatentyp, Abonnement etc. Ungültige Kopfdaten führen über den Pfad β direkt zum Schritt S25, mit dem der Kunde mittels einer Fehlermeldung informiert wird. In den Schritten S6 ... S9 wird der Inhalt der Speicher E1, E2 auf Kohärenz geprüft. Falls Speicher E1 nicht kohärent ist, wird in den Schritten S12 ... S16 der kohärente Speicherinhalt von E2 in Speicher E1 kopiert. In den Schritten S10 ... S11 läuft ein analoger Vorgang mit E1 in E2 kopieren ab. Gleichheit der Speicher E1 und E2 führt auf den Pfad µ zu den Schritten S17 ... S23, in denen die Daten der Transaktion aufbereitet werden, der Datentransfer nach dem Speicher E2 ausgeführt wird, das Freigabebit gesetzt und der Speicherinhalt von E2 in den Speicher E1 kopiert wird. Die Transaktion wird mit den Schritten S26 ... S29 abgeschlossen, in denen der Kunde aufgefordert wird, die Karte 25 zu entnehmen. Falls das Freigabebit gesetzt ist, wird das Produkt ausgegeben.

Ein zweiter Algorithmus ALGO2 steuert den Datentransfer mit Karten, die elektronisch auf einen bestimmten Kontostand aufgeladen oder aufladbar sind, der durch den Bezug von Produkten und/oder durch Nachladen veränderbar ist. Solche Karten weisen einen EEPROM Speicher auf, der in mehrere als Endspeicher dienende Speicherbereiche mit bestimmten Inhalten wie beispielsweise aktueller Kontostand in der Form einer bestimmten Anzahl Wertmarken oder in der Form mehrerer Wertmarkenzonen, wobei jede Zone Wertmarken unterschiedlicher Werte beinhaltet, Ausgabedatum, Kaufdatum, Ablaufdatum, etc. und in einen Speicherbereich mit einem Transferspeicher für den Datentransfer aufgeteilt ist. Der Speicherbereich mit dem Kontostand ist nachfolgend mit Kontospeicher, der Speicherbereich mit den übrigen Daten ist nachfolgend mit Datenspeicher bezeichnet. Der verfügbare Speicherbereich für einen Datentransfer ist für eine doppelte Speicherung von Transferdaten und Kontrolldaten nicht ausreichend. Der zweite Algorithmus ALGO2 zur Steuerung des Datentransfers für aufladbare Karten ist ähnlich aufgebaut wie der Algorithmus ALGO1 mit dem Unterschied, dass wegen des knappen Speicherbereiches die Transferdaten schrittweise zum Transferspeicher geführt werden. Dann wird der Inhalt des Transferspeichers in den Datenspeicher oder Kontospeicher abgelegt und der Transferspeicher gelöscht. Diese Rücksetzung löst den nachfolgenden Datentransferschritt aus, in dem beispielsweise der neue Kontostand transferiert wird. Das gewünschte Produkt wird erst frei gegeben, nachdem der neue Kontostand im Kontospeicher gespeichert ist.

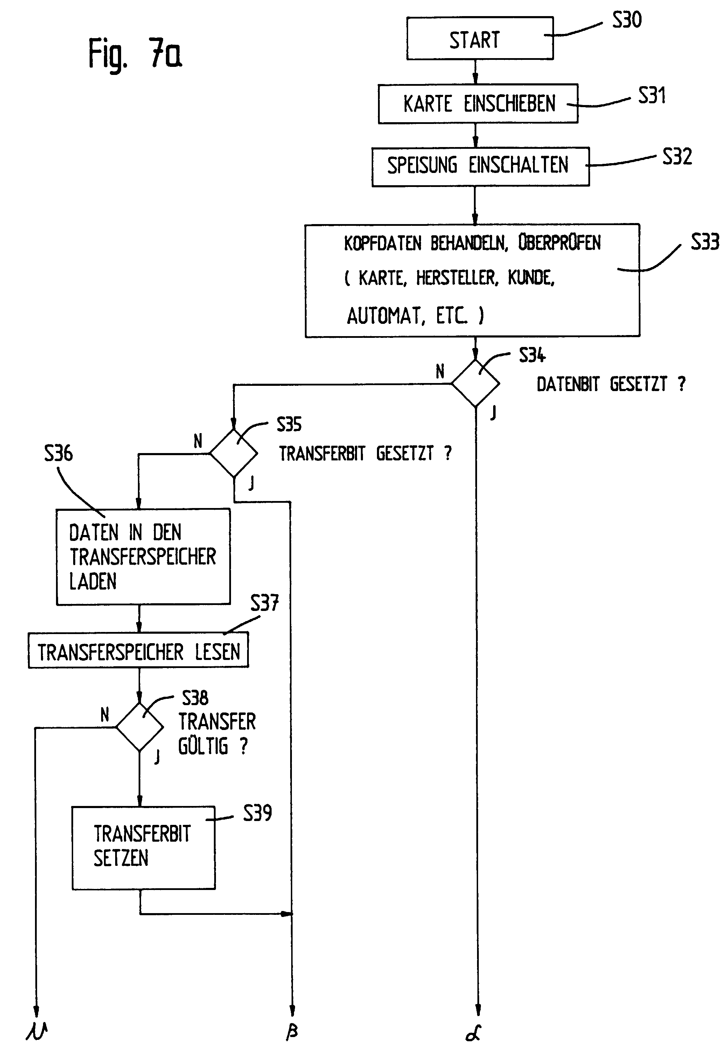

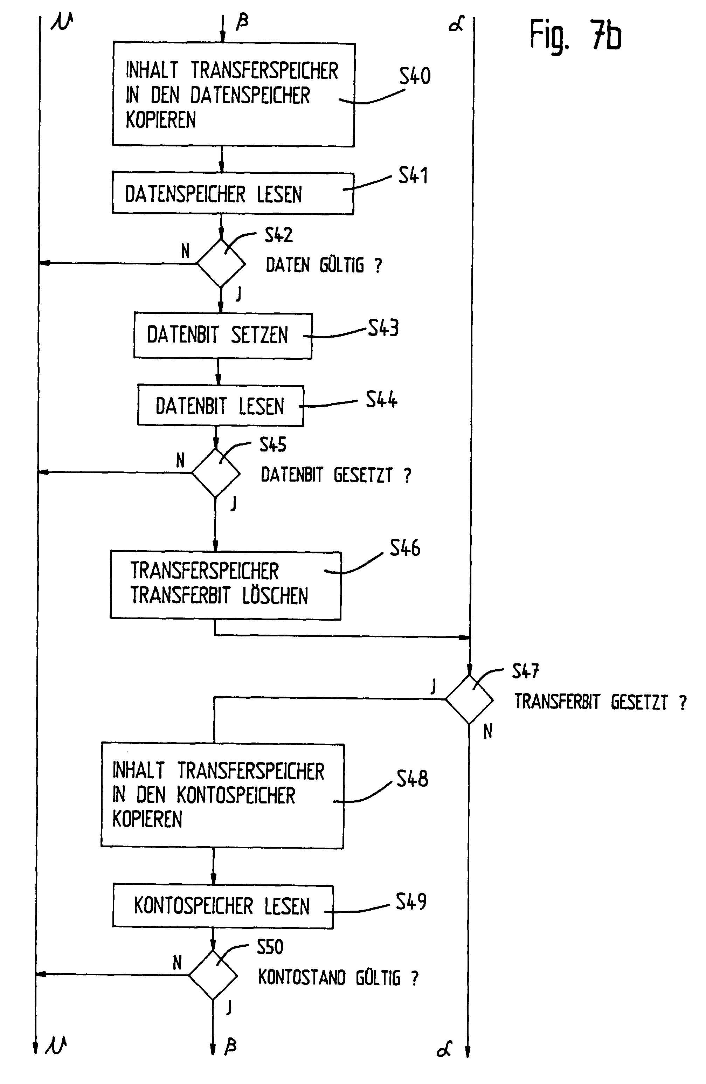

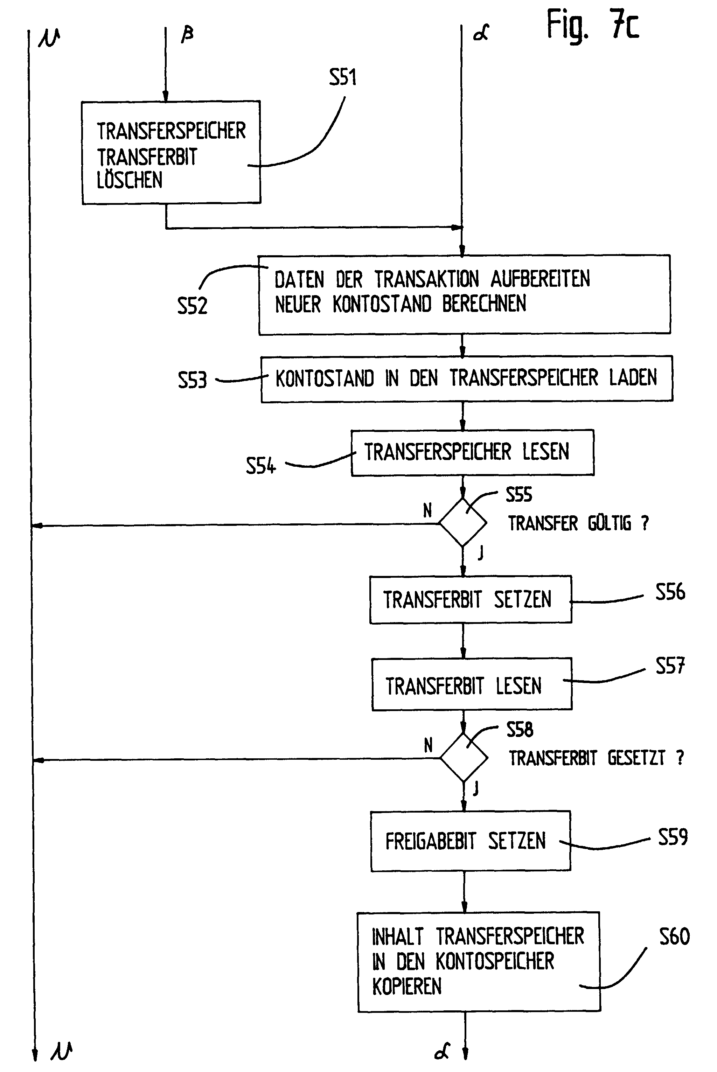

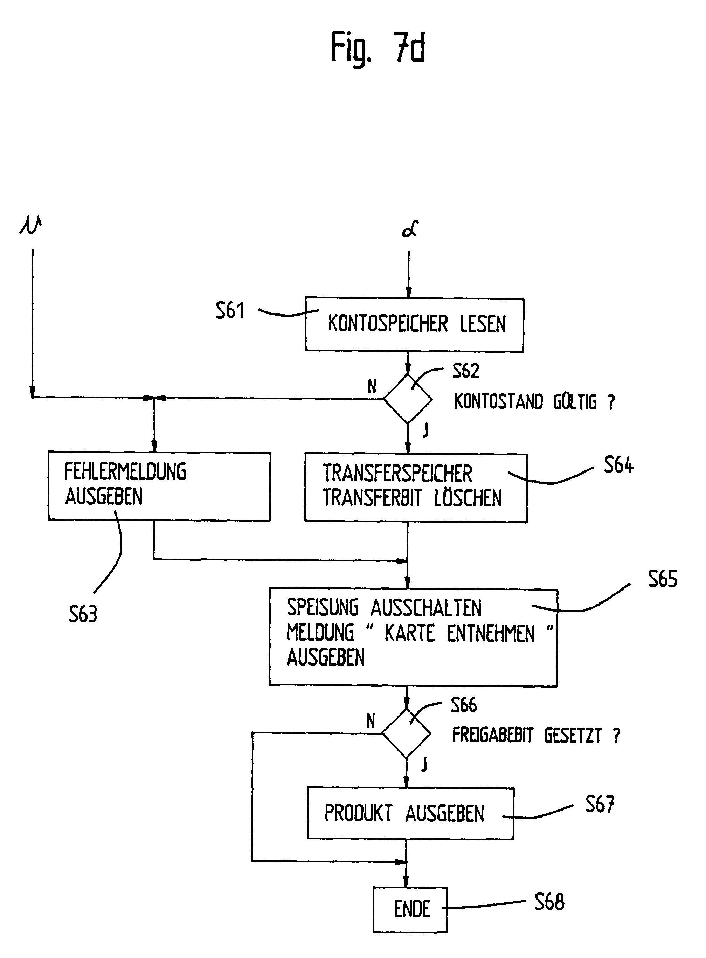

Fig. 7a, 7b, 7c und 7d zeigen den zweiten Algorithmus ALGO2 in bekannter Darstellungsform eines Flussdiagrammes. Die Schritte S30 ... S33 dienen der Initialisierung, der Prüfung und der Identifikation der auf der Karte 25 gespeicherten Kopfdaten wie beispielsweise Hersteller der Karte, Automatentyp, Kunde etc. Im Schritt S34 wird das Datenbit geprüft. Ein gesetztes Datenbit führt über den Pfad µ zum Schritt S47. Ein gelöschtes Datenbit führt zum Schritt S35 und je nach Transferbit entweder zu den Schritten S36 ... S39, in denen Daten in den Transferspeicher geladen werden oder zu den Schritten S40 ... S46, in denen die Daten des Transferspeichers in den Datenspeicher kopiert werden. Ein positives Ergebnis der Prüfung im Schritt S47 führt zu den Schritten S48 .... S51, in denen ein Datentransfer abgeschlossen wird. Falls das Datenbit gesetzt ist, wird in den Schritten S52 ... S64 der neue Kontostand berechnet und in den Kontospeicher übertragen sowie das Freigabebit gesetzt. Die Transaktion wird mit den Schritten S65 ... S68 abgeschlossen, in denen der Kunde aufgefordert wird, die Karte 25 zu entnehmen. Falls das Freigabebit gesetzt ist, wird das Produkt ausgegeben.

## Patentansprüche

1. Münzprüfer (1) mit Kartenleser (10) zur Prüfung und Auswertung von Zahlungsmitteln für Produkte, wobei der Münzprüfer (1) einen Schacht (14) für als Zahlungsmittel vorgesehene Münzen (11) und Karten (25) aufweist, der in einen ersten Münzkanal (15) und in einen Kartenschacht (28) mündet, wobei die Münzen (11) im ersten Münzkanal (15) mittels Sensoren (19) geprüft und ausgewertet werden und die Karte (25) mittels Kontaktflächen mit Kontaktzungen (32) einer dem Kartenleser (10) zugehörigen gedruckten Schaltung (33) zum Datenaustausch mit einem Rechner (34) in Verbindung steht,
dadurch gekennzeichnet,
dass mindestens ein Münzschlitz (7, 9) vorgesehen ist, durch den die Münzen (11) in den Schacht (14) und zum ersten Münzkanal (15) gelangen und dass mindestens ein Kartenschlitz (8) vorgesehen ist, durch den die Karte (25) in den Schacht (14) und zum Kartenschacht (28) gelangt.

2. Münzprüfer nach Anspruch 1,
dadurch gekennzeichnet,
dass im Schacht (14) Führungen (26, 27, 29) angeordnet sind, entlang denen die Karte (25) in den Kartenschacht (28) gleitet.

3. Münzprüfer nach Anspruch 2,
dadurch gekennzeichnet,
dass zur Überwachung der Endlage der Karte (25) im Kartenschacht (28) ein Endschalter (30) angeordnet ist.

4. Münzprüfer nach Anspruch 3,
dadurch gekennzeichnet,
dass im Kartenschacht (28) Kontaktzungen (32) des Kartenlesers (10) angeordnet sind, die in der Endlage der Karte (25) in Verbindung mit Kontaktflächen der Karte (25) treten.

5. Verfahren zum Lesen einer Karte (25) mit einem Datenträger mittels eines Kartenlesers (10) und zum Sichern der Daten beim Zurückziehen der Karte (25) vom Kartenleser (10) während eines Datentransfers zwischen dem Rechner (34) und der Karte (25) gekennzeichnet durch folgende Schritte:
a) dass die Transferdaten vom Rechner (34) in einen Transferspeicher der Karte (25) übertragen werden und
b) dass nach dem Datentransfer vom Rechner (34) zum Transferspeicher die Transferdaten vom Transferspeicher in einen Endspeicher der Karte (25) übertragen werden.

6. Verfahren nach Anspruch 5,
dadurch gekennzeichnet,
dass vor einer Transaktion die gespeicherten Transferdaten des Transferspeichers und des Endspeichers auf Gültigkeit überprüft werden und fehlerhafte Transferdaten des einen Speichers durch die Transferdaten des anderen Speichers ersetzt werden, wobei anschliessend der Datentransfer eingeleitet wird.

7. Verfahren nach Anspruch 5,
dadurch gekennzeichnet,
dass bei einer Transaktion die Transferdaten des Transferspeichers vom Rechner (34) auf Gültigkeit überprüft werden und bei einem positiven Prüfungsergebnis auf den Endspeicher übertragen werden, wobei anschliessend die Transaktion mit der Ausgabe des Produktes beendet wird.

8. Verfahren nach Anspruch 5,
dadurch gekennzeichnet,
dass der Datentransfer schrittweise erfolgt, wobei der Transferspeicher die Datenmenge eines Schrittes speichert, die vom Rechner (34) auf Gültigkeit überprüft wird und bei einem positiven Prüfungsergebnis auf den für die Daten eines Schrittes vorgesehenen Endspeicher übertragen wird, wobei der Transferspeicher danach für den nachfolgenden Datentransferschritt zurückgesetzt wird.

9. Verfahren nach Anspruch 8,
dadurch gekennzeichnet,
dass ein durch Zurückziehen der Karte (25) unterbrochener Datentransferschritt mit gültigen Daten im Transferspeicher vor dem nachfolgenden Datentransferschritt abgeschlossen wird.

## Claims

1. Coin checking device (1) with a card reader (10) for checking and evaluating payment means for products, wherein the coin checking device (1) comprises a shaft (14) for coins (11) and cards (25) provided as payment means, which shaft opens into a first coin channel (15) and into a card shaft (28), wherein the coins (11) in the first coin channel (15) are checked and evaluated by means of sensors (19) and the card (25) is connected by means of contact surfaces with contact tongues of a printed circuit (33), which belongs to the card reader (10), for data exchange with a computer (34), characterised thereby that at least one coin slot (7, 9) is provided, through which the coins (11) get into the shaft (14) and to the first coin channel (15), and that at least one card slot (8) is provided, through which the card (25) gets into the shaft (14) and to the card shaft (28).

2. Coin checking device according to claim 1, characterised thereby that guides (26, 27, 29), along which the card (25) slides into the card shaft (28), are arranged in the shaft (14).

3. Coin checking device according to claim 2, characterised thereby that a limit switch (30) is arranged for monitoring the end position of the card (25).

4. Coin checking device according to claim 3, characterised thereby that contact tongues (32), which in the end position of the card (25) get into connection with contact surfaces of the cards (25), of the card reader (10) are arranged in the card shaft (28).

5. Method of reading a card (25) with a data carrier by means of a card reader (10) and of securing the data on withdrawal of the card (25) from the card reader (10) during a data transfer between the computer (34) and the card (25), characterised by the following steps:
a) that the transfer data are transferred from the computer (34) into a transfer store of the card (25) and
b) that after the data transfer from the computer (34) to the transfer store the transfer data are transferred from the transfer store into an end store of the card (25).

6. Method according to claim 5, characterised thereby that before a transaction the stored transfer data of the transfer store and of the end store are investigated for validity and erroneous transfer data of the one store are replaced by the transfer data of the other store, wherein subsequently the data transfer is initiated.

7. Method according to claim 5, characterised thereby that in the case of a transaction the transfer data of the transfer store are investigated for validity by the computer (34) and in the case of a positive check result are transferred to the end store, wherein subsequently the transaction is concluded by delivery of the product.

8. Method according to claim 5, characterised thereby that the data transfer takes place in steps, wherein the transfer store stores the data quantity of one step, which is investigated by the computer (34) for validity and in the case of a positive check result is transferred to the end store provided for the data of one step, wherein the transfer store is thereafter reset for the succeeding data transfer step.

9. Method according to claim 8, characterised thereby that a data transfer step, which is interrupted by withdrawal of the card (25), with valid data in the transfer store is concluded before the succeeding data transfer step.

## Revendications

1. Dispositif de contrôle de pièces de monnaie (1) pour contrôler et évaluer des moyens de paiement pour des produits, comportant une gaine (14) pour des pièces de monnaie (11) et des cartes (25) prévues comme moyens de paiement, qui débouche dans un premier conduit pour pièces (15) et dans une gaine pour cartes (28), les pièces de monnaie (11) étant contrôlées et évaluées dans le premier conduit pour pièces (15) à l'aide de capteurs (19) tandis que la carte (25) est reliée à un ordinateur (34) à l'aide de surfaces de contact, pourvues de lames de contact (32), d'un circuit imprimé (33) associé au lecteur de cartes (10), en vue d'un échange de données,
caractérisé en ce qu'il est prévu au moins une fente pour pièces (7, 9) par laquelle les pièces (11) arrivent dans la gaine (14) et au premier conduit pour pièces (15), et
en ce qu'il est prévu au moins une fente pour cartes (8) par laquelle la carte (25) arrive dans la gaine (14) et à la gaine pour cartes (28).

2. Dispositif de contrôle de pièces de monnaie selon la revendication 1, caractérisé en ce qu'il est prévu, dans la gaine (14), des guides (26, 27, 29) le long desquels la carte (25) glisse dans la gaine pour cartes (28).

3. Dispositif de contrôle de pièces de monnaie selon la revendication 2, caractérisé en ce qu'il est prévu, pour surveiller la position de fin de course de la carte (25) dans la gaine pour cartes (28), un commutateur de fin de course (30).

4. Dispositif de contrôle de pièces de monnaie selon la revendication 3, caractérisé en ce qu'il est prévu, dans la gaine pour cartes (28), des lames de contact (32) du lecteur de cartes (10) qui, dans la position de fin de course de la carte (25), entrent en contact avec des surfaces de contact de la carte (25).

5. Procédé pour lire une carte (25) contenant un support de données à l'aide d'un lecteur de cartes (10), et pour sauvegarder les données lorsqu'on retire la carte (25) du lecteur de cartes (10) pendant un transfert de données entre l'ordinateur (34) et la carte (25), caractérisé par les étapes suivantes :
a) les données de transfert sont transférées par l'ordinateur (34) dans une mémoire de transfert de la carte (25), et
b) après le transfert des données effectué par l'ordinateur (34) vers la mémoire de transfert, les données de transfert sont transmises à partir de celle-ci dans une mémoire terminale de la carte (25).

6. Procédé selon la revendication 5, caractérisé en ce que, avant une transaction, la validité des données de transfert mémorisées de la mémoire de transfert et de la mémoire terminale est vérifiée, et les données de transfert incorrectes d'une mémoire sont remplacées par les données de transfert de l'autre mémoire, le transfert de données étant déclenché ensuite.

7. Procédé selon la revendication 5, caractérisé en ce que lors d'une transaction, la validité des données de transfert de la mémoire de transfert est vérifiée par l'ordinateur (34) et si le résultat du contrôle est positif, ces données de transfert sont transférées dans la mémoire terminale, la transaction se terminant ensuite par la distribution du produit.

8. Procédé selon la revendication 5, caractérisé en ce que le transfert de données se fait par étapes, étant précisé que la mémoire de transfert stocke la quantité de données d'une étape, dont la validité est vérifiée par l'ordinateur (34) et si le résultat du contrôle est positif, cette quantité de données est transférée dans la mémoire terminale prévue pour les données d'une étape, la mémoire de transfert étant ensuite réinitialisée pour l'étape suivante du transfert de données.

9. Procédé selon la revendication 8, caractérisé en ce qu'une étape de transfert de données avec des données valables qui est interrompue par le retrait de la carte (25) est achevée dans la mémoire de transfert avant l'étape de transfert de données suivante.
